# EUROPEAN PATENT SPECIFICATION

(11) **EP 4 657 239 B1**
(45) Date of publication and mention of the grant of the patent: **25.11.2026**
(21) Application number: 24178727.4
(22) Date of filing: 29.05.2024
(51) Int. Cl.: G06F 8/10, G06F 16/242, G06F 30/00, G06F 40/30, G06N 20/00

(54) **METHOD AND ARRANGEMENT FOR BUILDING A PIPING AND INSTRUMENTATION DIAGRAM**
VERFAHREN UND ANORDNUNG ZUM AUFBAU EINER ROHRLEITUNG UND INSTRUMENTATIONSDIAGRAMM
PROCÉDÉ ET AGENCEMENT POUR CONSTRUIRE UN SCHÉMA DE TUYAUTERIE ET D'INSTRUMENTATION

(43) Date of publication of application: 03.12.2025
(73) Proprietor: Siemens Aktiengesellschaft, 80333 München (DE)
(72) Inventor: Mogoreanu, Serghei, 81827 München (DE); Ringsquandl, Martin, 83064 Raubling (DE); Hildebrandt, Marcel, 80634 München (DE); Wendelberger, Klaus Walter, 68789 St. Leon-Rot (DE); Zhang, Jia Rui, 200120 Shanghai (CN)
(74) Representative: Siemens Patent Attorneys

(56) References cited:
- KOZIOLEK ANNE: "LLM-based Control Code Generation using Image Recognition", 17 November 2023 (2023-11-17), pages 1 - 8, XP093201125, Retrieved from the Internet <URL:https://arxiv.org/pdf/2311.10401> [retrieved on 20241024]
- HIRTREITER EDWIN ET AL: "TOWARDS AUTOMATIC GENERATION OF PIPING AND INSTRUMENTATION DIAGRAMS (P&IDS) WITH ARTIFICIAL INTELLIGENCE A PREPRINT", 26 October 2022 (2022-10-26), XP093217474, Retrieved from the Internet <URL:https://www.pi-research.org/project/pid_pfd/Preprint.pdf> [retrieved on 20241024]
- SCHULZE BALHORN LUKAS ET AL: "Toward autocorrection of chemical process flowsheets using large language models", 5 December 2023 (2023-12-05), XP093217395, Retrieved from the Internet <URL:https://arxiv.org/pdf/2312.02873> [retrieved on 20241024]
- KOZIOLEK HEIKO ET AL: "LLM-based and Retrieval-Augmented Control Code Generation", PROCEEDINGS OF THE 1ST INTERNATIONAL WORKSHOP ON LARGE LANGUAGE MODELS FOR CODE, 20 April 2024 (2024-04-20), pages 22 - 29, XP093217773, Retrieved from the Internet <URL:https://dl.acm.org/doi/pdf/10.1145/3643795.3648384>

## Description

The invention relates to a computer implemented method according to the preamble of claim 1, an arrangement for carrying out the computer implemented method according to the preamble of claim 12, as well as a computer-program product according to the preamble of claim 13 and a provisioning device according to the preamble of claim 14.

It is known that a key aspect of the process industry is the creation of so-called Process and Instrumentation Diagrams (P&IDs). P&IDs are complex diagrams that usually illustrate the process equipment including their interconnections as well as the sensors and actuators used to control a process and to ensure safety during process operation.

These diagrams are the foundation for understanding the entire process flow and are critical for designing, operating, and maintaining the process systems. They depict the relationship between all the components of a physical process flow, such as equipment, pipes, and instruments, their interconnections, and provide the basic information on how the process is controlled.

Creating P&IDs can be a challenging task because these diagrams must accurately represent complex physical systems and comprehend the different aspects of production in process industries including the properties of different materials and possibly their chemical reactions. Therefore, a deep understanding of the process and system is required. As a result, the creation of P&IDs is a labor-intensive and time-consuming process, which often involves multiple revisions to ensure accuracy and compliance with industry standards.

The following prior art documents are considered relevant: Koziolek Anne: "LLM-based Control Code Generation using Image Recognition", (2023-11-17), URL:https://arxiv.org/pdf/2311.10401; Hirtreiter Edwin ET AL: "TOWARDS AUTOMATIC GENERATION OF PIPING AND INSTRUMENTATION DIAGRAMS (P&IDS) WITH ARTIFICIAL INTELLIGENCE A PREPRINT", (2022-10-26), URL:https:// www.pi-research.org/project/pid_pfd/Preprint.pdf .

To simplify the process of creating a new P&ID, companies tend to create and maintain a database of common subsystems, so-called "typicals", that can be used as a reference when designing a P&ID. These usually include standard configurations of equipment, piping, and instrumentation that are commonly used in the company's processes. This can greatly simplify and speed up the design process, ensuring consistency across different projects, reducing the potential for errors, and ensuring adherence to company and industry standards. Nonetheless, identifying the required subsystems and correctly combining them to fulfill all functional requirements remains a challenging and time-consuming task.

The underlying problem of the invention is therefore to provide a solution that at least partially overcomes the disadvantages of the prior art, in particular to provide a technical solution that allows for reducing time-consumption.

This problem is solved by the computer-implemented method according to the preamble of claim 1, based on the features of the preamble by its characteristic features, by the arrangement according to the preamble of claim 12, by the computer program product according to the preamble of claim 13 and by the provisioning device according to the preamble of claim 14.

The computer-implemented method for building a Piping and Instrumentation Diagram, "P&ID", according to the invention is characterized in that,
a) first data representing data structured according to a standardized description format at least describing a part of subsystems of said P&ID representing a process, in particular industrial process, to be established, is automatically built based on a formalized textual input, said formalized textual input being automatically generated based on a natural language input representing said process, in particular industrial process, to be established, whereby
c) said natural language input being automatically transformed to a second data representing formalized textual input,
c) said first data is retrieved and/or combined based on said second data in such a manner that third data representing said P&ID can be generated for further processing, for example at least temporally stored, displayed and/or edited,
d) said building of first data, transformation to second data, retrieval, combination and/or generation of third data is achieved through prompting at least one large language model.

The method allows automatization for building a P&ID of a new process to be established only needing a natural language input of a user, who wants to establish said new process, so that vast amount of time consumption is reduced. This is among other features achieved by processing the natural language input in such a manner that at least part of subsystems of said new P&ID are automatically identified bases on the natural language input, so that standardized description format representations of said subsystems can be retrieved and/or combined in such a manner that a standardized description format representing the new P&ID is generated. It is further achieved by prompting at least one LLM in connection with at least one of said features, as this allows a generation of information that otherwise would need the manually adding expert-knowledge.

Furthermore, the invention relates to an arrangement for performing the computer implemented method. The arrangement has the advantage of having the means to carry out the method and hence helps to realize the advantages of the computer-implemented method according to the invention.

The computer program product comprises instructions which, when the program is executed by a computer, cause the computer to carry out the method.

The provisioning device stores and/or provides the computer program product.

Further advantageous arrangements and embodiments of the invention are set forth in the respective dependent claims.

According to an embodiment of the method and arrangement according to the invention the natural language input is detected and processed as a prompt to a first LLM in such a manner as to generate said formalized textual input representing said process, in particular industrial process, to be established, whereby said second data is being built from formalized textual input by incorporating at least a representation of the formalized textual input.

This embodiment allows for augmenting the natural input, which describes the process and/or results to be achieved with it rather than details of what subsystems are needed for such a new process, to a textual description of all of the subsystems that are required for said new process without the need of an intervention by an expert, so that this allows a much faster generation of a recipe. As the second data is intended for further processing, e.g. forwarding to another means carrying out steps of the invention, the data might be formed according to a protocol, for example requiring control data, like header, to be added, coding, for example binary coding, and/or syntax, for example transforming the textual description into another, in particular structured, representation, leaving the information given by the textual description unchanged.

According to another embodiment of the method and arrangement according to the invention preferably a pre-trained LLM, in particular an off-the-shelf model like e.g. GPT-4, is utilized as said first LLM.

This is a cheap and straightforward solution as such LLMs are capable to realize the generation of the second data without or with only less adaption.

According to yet another embodiment of the method and arrangement first data is retrieved from a database, whereby the database data is built of a plurality of subsystems and textual annotations in such a manner that for each subsystem data a unique annotation, for example the subsystem's purpose, the solution approach, the description of the equipment within the subsystem, and/or the functionalities that the subsystem offers, is assigned and whereby each element representing a subsystem of said first data is retrieved based on a matching process comparing said second data with said assigned annotations identifying a subsystem (P&ID_SUB), if a criterion, for example a minimum amount of correlation, i.e. similarity, is met.

With this embodiment a database of common subsystems is leveraged to identify the required building blocks, i.e. the first data. This also overcomes the challenge that a standardized description format, for example XML, in particular DEXPI XML, is not suitable for off-the-shelve retrieval models, since experiments with XML embeddings indicate that e.g. perturbations to the order of standardized description format, e.g. XML-, elements usually affect their similarity, while the underlying meaning of the P&ID is unchanged. To make accurate use of an off-the-shelf model for subsystem retrieval, the embodiment requires each subsystem to be annotated with a textual description, for example the subsystem's purpose, the solution approach, the description of the equipment within the subsystem, and/or the functionalities that the subsystem offers. With such a description a "verbalization" of the P&IDs can be created with which the second data can be compared.

According to another embodiment of the method and arrangement according to the invention the matching process utilizes the second data as query that is, to be matched, in particular by a keyword search engine, against the assigned annotations.

This embodiment is one out of many that are applicable to the method and arrangement according to the invention. It is characterized by being simple and effective, especially applicable for simple databases.

However, according to a further embodiment of the method and the arrangement of the invention the database is utilized as vector database. This allows for applying a more complex and accurate method for said matching process.

According to yet another embodiment method and arrangement of the invention the assigned unique textual annotations are generated by prompting a second LLM with said first data, said second LLM being a fine-tuned LLM based on few-shot prompting a pre-trained LLM, for example the first LLM, with known pairs of a subsystem and a unique annotation of it.

This embodiment overcomes the challenge of manually annotating each subsystem in the database requiring tremendous effort from the domain experts. It overcomes it in particular with utilizing the technique known as few-shot prompting to generate the annotations using a pre-trained LLM, in particular but not necessarily the first LLM. With utilizing this technique, it is possible to include a few, ideally, i.e. concise, and most complete, formulated, related, expert-crafted examples of annotated subsystems in the prompt used for training respectively generating an annotation for a new subsystem, so that a vast amount of training data sets is avoided, too.

According to another embodiment of the method and arrangement according to the invention at least said first data and the respective second data and/or natural language input is processed as a prompt to a third LLM in such a manner as to generate said third data representing all subsystems of said process, in particular industrial process, to be established, whereby said third data is built in such a manner that the parts of the third data that go beyond the first data are distinguishable.

With this embodiment if only part of subsystems that are required are retrieved this could be augmented to a complete P&ID the user was heading for with his natural language input. Furthermore, if need be, missing parts are distinguished, e.g. by formulating an instruction, e.g. as a missing connection detection. Such missing connections could be missing pipes but also missing signal lines from the corresponding control logic & safety design definitions.

In other words, the retrieved subsystems are combined into a complete P&ID with an augmented generation step, where the retrieved subsystems from the matching process are augmented to the original request from the user as input to a custom third LLM ("instruct LLM").

According to yet another embodiment of the method and arrangement of the invention a custom LLM created by performing supervised fine-tuning is utilized as the third LLM.

With this embodiment said combining of the retrieved subsystems into a complete P&ID gets more sophisticated and accurate, at least because this embodiment overcomes the challenge, that was recognized by the inventor, being that none of the pre-trained models can perform such a combination task due to not being sufficiently exposed to standardized description format-, e.g. XML, in particular DEXPI-XML-, data and associated tasks during pre-training, such standardized description format is at least advantageous because it allows for at least interoperability.

According to another embodiment of the method and arrangement of the invention the supervised fine-tuning is performed based on a number of datasets comprising a pair of input data and output data, said input data and said output data being of known complete P&IDs in such a manner that said input data represents a part of the complete P&ID and said output data represents the complementary missing part of the complete P&ID, whereby the third LLM is prompted with said input data and the output data is used to refine the prediction said third LLM generates based on the input data, whereby the data is structured according to said standardized description format.

In other words, a dataset of (input, output) pairs that were specifically designed for this task could be applied for the tuning. Each entry in the dataset contains as "input" a partially completed P&ID in DEXPI XML format, from which several piping or signal line network segments have been removed at random; the "output" portion of the dataset entry are the removed piping or signal line network segments. One of the advantages being that the generation of such a dataset is relatively straightforward given a collection of complete P&IDs, which is usually given in the industrial domain. Hence, it is a straightforward, yet accurate results delivering embodiment.

According to another embodiment of the method and arrangement according to the invention said data structured according to a standardized description format is an XML format, in particular the "Data Exchange in the Process Industry"-, DEXPI-format.

By applying preferably DEXPI-XML the embodiments of the method and arrangements of the invention integrate various modalities of P&ID data, such as proprietary formats from tools like COMOS, image-based data, or standard graph formats, provided they can be exported, converted, or integrated into DEXPI format.

The following embodiments of the invention are explained in more detail based on Figures 1 to 4. In Figures 1 to 4, the same or functionally identical elements are provided with the same reference numerals, unless otherwise specified. The figures show:
- Figure 1: shows a schematic representation of a first embodiment of the computer implemented method according to the invention in its most general form,
- Figure 2: shows as a further exemplary embodiment of the computer implemented method according to the invention a schematic representation of an annotation through few-shot prompting according to said embodiment,
- Figure 3: shows as another exemplary embodiment of the computer implemented method according to the invention a schematic representation of generating a textual description of the process to be established and respective retrieving of required subsystems from the database according to said embodiment,
- Figure 4: finally shows a schematic representation of yet another exemplary embodiment of the method according to the invention disclosing at least the steps of combining the retrieved subsystems into a complete P&ID according to the invention.

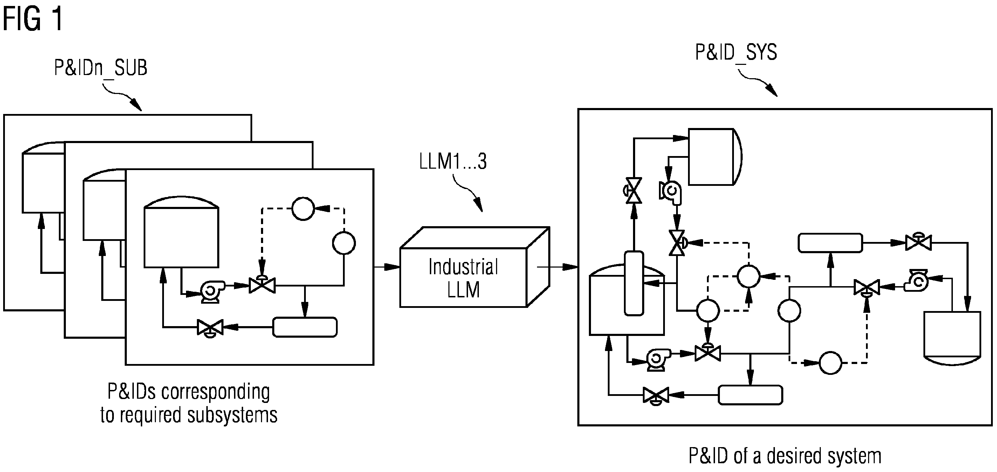

The embodiments described below in Figures 1 to 4 are preferred embodiments and developments of the invention.

In particular, the following embodiments merely show exemplary possible realizations, such as possible realizations of the inventive concept, as it is impossible and also not necessary or expedient for understanding the invention to mention all these possible realizations.

Furthermore, all the usual possibilities for realizing the invention in the prior art are known to a person skilled in the art, particularly in light of the independent claims, so that an independent disclosure in the description is not necessary.

In the embodiments the described components of the embodiments each represent individual features of the invention, which further develop the invention independently of one another and are therefore also to be regarded as components of the invention individually or in a combination other than the one shown.

Furthermore, the described embodiments can be supplemented by further features of the invention already described.

The same reference numerals have the same meaning in the different Figures.

In Figure 1 a schematic representation of a first embodiment of the computer implemented method according to the invention in its most general form is depicted.

It shows an embodiment of the core of the invention which is in principle based on automatic utilization of at least one pre-trained Large Language Modell (LLM) LLM1...3, of which at least one is a pre-trained LLM that was fine-tuned for the industrial utilization according to the invention, in particular the automated generation of a complete P&ID of a desired system P&ID_SYS, so that at least one LLM LLM1...3 is regarded as an industrial LLM as depicted in Figure 1.

As can be seen, said industrial LLM LLM1...3 is at least functionally connected to a source P&ID_SUB that includes at least most of, in particular all of, the P&IDs corresponding to required subsystems that are necessary to automatically generate said complete P&ID System P&ID_SYS.

Said P&IDs corresponding to required subsystems are input in said industrial LLM LLM1...3 upon request of a production process that leads required subsystems to a retrieval of said P&IDs corresponding to required subsystems. After the receipt of said P&IDs corresponding to required subsystems the industrial LLM LLM1...3 generates said complete P&ID System P&ID_SYS combining said P&IDs corresponding to required subsystems to the complete P&ID System P&ID_SYS, in particular, in case P&IDs that are required are missing and/or incomplete the LLM LLM1...3 also generates the missing P&IDs.

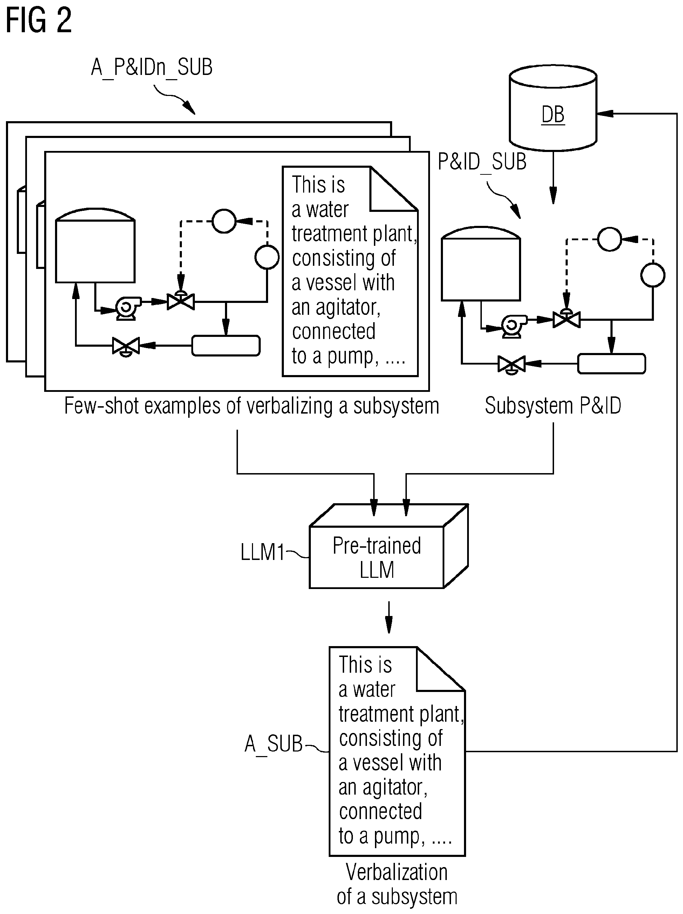

In Figure 2 as a further exemplary embodiment of the computer implemented method according to the invention a schematic representation of an annotation through few-shot prompting according to said embodiment is shown.

This is a process preferably performed before the computer method of the invention is utilized for new production processes to be designed as the process according to said embodiment enables an effective approach to generate verbalizations of a subsystem, which provides for an accurate method for said retrieval of said P&IDs corresponding to required subsystems.

For this purpose, said process is based on few-shot prompting on one hand and on the other hand is based on utilizing a database DB containing P&ID subsystems known by the database owner, e.g. from at least one of earlier production projects of the owner and/or other sources providing the database DB with further P&ID subsystems that were not yet stored in said database DB, in order to train the pre-trained LLM LLM1.

The training is performed with the aim to produce verbalizations of a subsystem A_SUB that qualify as an, preferably ideal, annotation for a P&ID subsystem, i.e. for example a preferably reproductible description in a unique and concise way.

Few-shot prompting is a technique used in natural language processing (NLP) and particularly in models like said pre-trained LLM, which might be based on GPT, to fine-tune the model quickly on a new task or domain with only a few examples or prompts.

It is in principle a method with the following steps:
Prompting: Instead of training the model on a large dataset for a specific task, few-shot prompting involves providing the model with a few examples or prompts that illustrate the task you want it to perform.

Adaptation: The model is then fine-tuned or adapted based on these examples. During this process, the model learns to generalize from the provided examples and adjust its parameters to better perform the task.

Inference: Once fine-tuned, the model can then be used to generate responses, make predictions, or perform other tasks related to the given domain or task, even when it encounters new inputs that it has not seen during training.

Few-shot prompting is particularly useful when only limited labeled data is available for a specific task or there is a need to quickly adapt the model to new tasks or domains without extensive retraining. It allows for rapid customization and deployment of NLP models for various applications.

For this purpose, the pre-trained LLM LLM1 is provided with pairs of P&ID subsystems and ideal, i.e. for the said purpose the most appropriate, annotations A_P&IDn_SUB, i.e. the labels needed for the few-shot prompting, as few-shot examples of verbalizing a subsystem. The pre-trained LLM LLM1 is, especially at a later stage, also provided with a P&ID subsystem P&ID_SUB stored in said database DB to let the pre-trained LLM LLM1 generate a verbalization for this particular A_SUB, which then can also be stored in said database with a relation to its P&ID subsystem P&ID_SUB as an appropriate annotation.

With a database that was prepared for example in the manner described above the computer implemented method according to the invention can then perform the next step in connection with the generation of a desired P&ID P&ID_SYS.

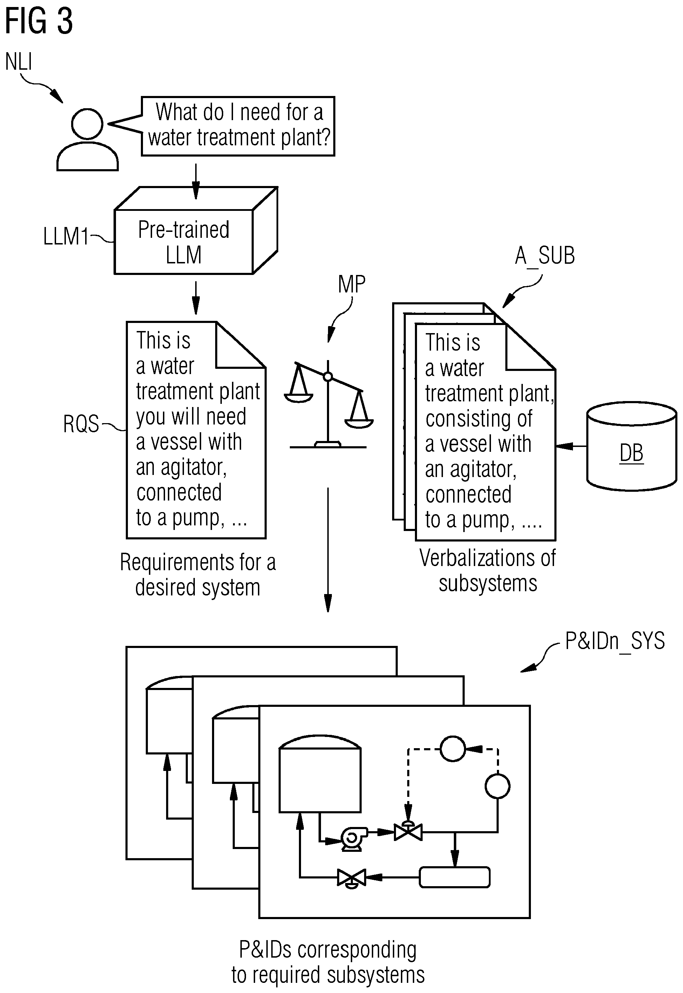

Figure 3 shows such next step as another exemplary embodiment of the computer implemented method according to the invention. What is shown is a schematic representation of generating a textual description of the process to be established and respective retrieving of required subsystems from the database according to said embodiment.

The process starts with a natural language input NLI of a user. For such purpose an apparatus, e.g. a computer, where at least parts of the computer implemented method are implemented, with interfaces enabled for natural language processing is utilized.

The user might be asked for a prompt with the desired production process he or she wants to be created. In the example the input is "What do I need for a water treatment plant?" This is then processed by the apparatus to the pre-trained LLM LLM1, which might be the same pre-trained LLM LLM1 that was fine-tuned with few-shot examples or might be just another pretrained LLM, to let it generate a formalized text RQS describing requirements for the desired system.

As a next step the requirements RQS are forwarded to a matching process MP that tries to match the formalized text RQS with annotations, e.g. verbalizations of subsystems, in said database DB that has been enriched with annotation related to the P&ID subsystems that are also stored in the database DB.

For this purpose, the data representing the formalized text RQS undergoes at least one matching method, that finds for example the unique keywords in order to find at least a matching P&ID subsystem. As a desired P&ID system usually consists of several P&ID subsystems this is repeated till no new matches are recognized, so that at the end, the process delivers, e.g. for all matches, a number of P&IDs corresponding to required subsystems P&IDn_SYS that were found.

Having done this, the final step of an embodiment of the computer implemented method according to the invention can be applied.

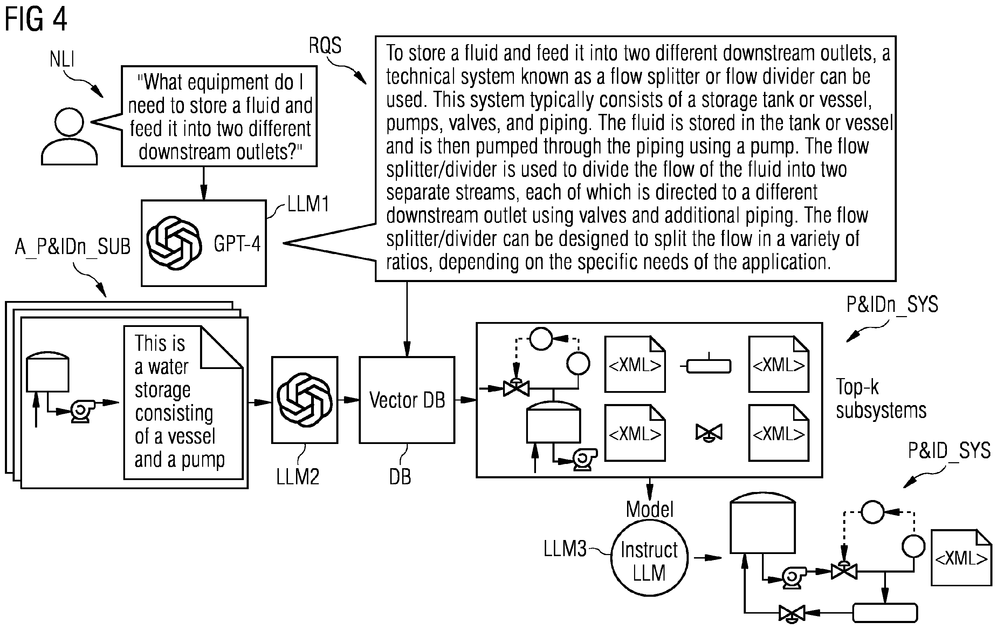

Figure 4 finally shows a schematic representation of yet another exemplary embodiment of the method according to the invention disclosing, among partly previously mentioned steps, said final step comprising combining the P&IDs corresponding to required subsystems into a complete P&ID system P&ID_SYS.

The process shown again starts with a natural language input NLI for a pre-trained LLM LLM 1 prompting for equipment needed for a certain production process. In this example GPT-4 is utilized as the LLM. However, other pre-trained LLMs are also possible, especially ones that are appropriate for NLP.

The GPT-4 LLM1 might be trained according to previously mentioned training methods. Upon said prompt it generates an answer, which comprises verbalizations RQS of subsystems required for the production process prompted for.

The verbalization RQS is then matched with entries in a database DB, which according to this example is run as a vector database, the vectors embedding P&ID subsystems and their annotations. The database being filled with pairs of annotated P&ID subsystems A_P&IDn_SUB in connection with a pretrained LLM, which according to this example is a separate, second, LLM LLM2. This might for example enhance the effectiveness of the process according to the invention and allow for better fine-tuning efficiency.

As a result of the matching process several P&ID subsystems P&IDn_SYS are found and in case of ambiguity more and/or alternative P&ID subsystems than actually required are found so that for example the P&ID subsystems P&IDn_SYS may be sorted and/or reduced to the top-k subsystems, with k being an, e.g. optimized parameter for sorting/reducing that is also applied automatically.

Finally, the sample P&ID subsystems P&IDn_SYS are forwarded to a third pretrained LLM LLM3 that is a proprietary LLM, that could be called "Instruct LLM". That is, according to the invention the step of combining subsystems into a complete system is to be performed by said instruct LLM LLM3, which is a creation of a custom model through a procedure known as supervised fine-tuning which allows for accurately combining the right P&ID subsystems out of the sample of P&ID subsystems P&ID_n to the complete P&ID system the user was prompting for, whereby this process might comprise the steps of proposing missing subsystems, if the sample lacks of necessary ones, and/or choosing the accurate one out of several alternatives of subsystems collected in the sample.

At this point the process delivers said resulting P&ID System P&ID_SYS apparatus, that was used for the input, to the prompting user and/or transformed in a structured data format, which is an XML format.

The invention is not limited to the described embodiments and further developments. Rather, all further developments and combinations falling within the scope of the claims, comprising individual, multiple, or all claimed features according to the claims, are encompassed.

Below, both the described embodiments and further developments are explained in other words, as well as new embodiments and further developments of the invention, all with additional details and advantages, which are partly also derived from a comparison to the state of the art carried out below for this purpose.

As can be summed up, the invention teaches a system for generating a complete P&ID from the functional requirements for the production of a specific product ("recipe") expressed by the user in a natural language input NLI.

The taught embodiments of the system leverage a database DB of annotated subsystems A_P&IDn_SUB to first identify the required building blocks P&IDn_SYS, and then combine them into a single coherent system P&ID_SYS by identifying missing pipes and signal lines going from the equipment nodes of one subsystem P&ID_SUB towards the equipment nodes in other subsystems P&ID_SUB. At its core, the embodiments of the system and method, that the invention teaches, use large language models LLM1...3 for performing each of the required steps. While some of the steps can be achieved using state-of-the-art, off-the-shelf models, i.e. pre-trained LLM LLM1, LLM2, e.g. GPT-4, for the step of combining subsystems P&ID_SUB into a complete system the embodiment of the invention creates and utilizes a custom model (instruct LLM, LLM3), whereby creation is preferably achieved through a procedure known as supervised fine-tuning, which will be described in more detail below.

With the invention, especially its embodiments, manual creation of P&ID Systems is overcome, where in a first step an experienced process engineer had to read and fully understand the production requirements which describe the process to be installed to produce a certain product. This requirement description is called recipe. Based on the given requirements, the process engineer then designs a rough layout of a process plant which fulfills these requirements. This rough layout contains the major process components like tanks, heat exchangers, pumps, etc., only. The rough process layout is called Process Flow Diagram (PFD). Once the PFD is verified and agreed, the P&ID can be created by adding more details like sensors and actuators, secondary equipment like vents and drains, and the basic interconnections for the automatic control of the plant.

This description is very rough. Usually, it is a much more complex, agile process including iteration loops. Along the engineering process the recipe is detailed in successive steps and transformed from a so called "General Recipe" via a so called "Site Recipe" and a so called "Master Recipe" to a so called "Control Recipe".

For said manual process engineers will use their experience from past projects to perform this work. Such experience is also represented in libraries of P&IDs, which include designs from past projects. Some companies have created libraries of subsystems as standard templates to be reused. An engineer will try to retrieve a P&ID from a past project and/or some templates from a subsystem library to create his new P&IDs. The usage of available templates in a modular engineering approach considerably reduces the engineering efforts and increases the engineering quality.

However, due to the high variability of the products and the processes to produce them, it is difficult or even impossible to find corresponding reference projects which have a similar design. Even if a library of subsystems is available, it is tedious to find appropriate ones which fit to the project very well. In any case, the project specific adaption of the templates and the combination of these templates to a final P&ID still requires manual work. This work might to a certain extent be required several times if requirements change during the iterative engineering process.

For this purpose, a system is required which can create P&IDs automatically from given production requirement definitions (recipes). In an ideal case, it is possible to modify, detail, and extend requirements over time and get the effect of such additional information in a correspondingly updated P&ID.

In the state-of-the-art, PFDs but also P&IDs can be automatically generated from recipes and templates via rule-based approaches, but such approaches require a modeling of the corresponding industry domain including the available equipment and the possible processing steps. This modeling furthermore again requires a considerable amount of effort if a full-blown P&ID shall be created. Therefore, such approaches did not prevail in production engineering.

The solution according to the invention overcomes such issues.

The system and computer implemented method achieves this in principle by generating a complete P&ID P&ID_SYS from functional requirements for productions as a textual input using LLMs LLM1...3, with the embodiments successively adding advantageous further developments. One of said further developments is given with a determined setting in which the embodiments of the system and method according to the invention operate, where it requires that all P&ID-related data artifacts, e.g. subsystems P&IDn_SUB within the database DB, complete P&IDs P&ID_SYS using for threshold tuning and validation, are available in the DEXPI XML format. DEXPI stands for Data Exchange in the Process Industry, which is an initiative to develop a standardized data exchange format in process industry. As DEXPI XML is a standard serialization format for P&IDs utilizing it makes the implementation of the invention - among other advantages - more seamless. For example, a further advantage of the utilization of DEXPI is given by the fact, that it allows to integrate various modalities of P&ID data, such as proprietary formats from tools like COMOS ("Computerized Management of Technical Objects Systems"), image-based data, or standard graph formats, provided they can be exported, converted, or integrated into DEXPI format.

Additional benefits arise from the subsequent discussion of several features of the system and method according to the invention, either considered individually or in combination.

For example, with respect to the features related to the annotation of subsystems A_P&IDn_SUB through few-shot prompting the system and method according to the invention it becomes apparent that it leverages a database DB of common subsystems P&IDn_SUB to identify the required building blocks. Said DEXPI XML format, for example, is not suitable for off-the-shelve retrieval models, since e.g. perturbations to the order of XML elements affect their similarity, while the underlying meaning of the P&ID is unchanged. Hence, to make use of an off-the-shelf model for subsystem P&ID_SUB retrieval, we require each subsystem P&IDn_SUB to be annotated with a textual description A_SUB of the subsystem's purpose and solution approach, including the description of the equipment within the subsystem P&ID_SUB and the functionalities that the subsystem P&ID_SUB offers, i.e. the verbalization of it.

In contrast to a manual annotation, like it is known from the state of the art, where each subsystem in a database would require tremendous effort from the domain experts, the embodiments of the system and the method according to the invention advantageously teach to use a technique known as few-shot prompting to generate the annotations A_SUB according to the invention using a pre-trained LLM LMM1, LLM2, i.e. according to yet another embodiment a few (ideally, related) expert-crafted examples of annotated subsystems A_P&IDn_SUB in the prompt used for generating an annotation A_SUB for a new subsystem are included.

This first and foremost supports also the automation regarding the step of generating a textual description of the process to be established P&ID_SYS and to be implemented via the P&ID from the user input, where a detailed description of the process RQS to be established and for which the P&ID P&ID_SYS must be created, is generated from the user's textual input NLI using a pre-trained LLM LLM1, LLM2.

It also supports retrieving the required subsystems from the database DB, where the retrieval step of the retrieval, e.g. according to the "Retrieval-Augmented Generation" (RAG), the detailed description RQS of the previously addressed step as query is to be matched against the database DB of subsystem descriptions A_SUB. This embodiment of the method according to the invention can for example be achieved with traditional keyword search engines and/or for example with more sophisticated approaches, e.g. by utilizing vector databases.

For combining the retrieved subsystems into a complete P&ID P&ID_SYS, i.e. in the augmented generation step, the retrieved subsystems are augmented to the original request from the user as input NLI to the custom LLM (instruct LLM) LLM3, so that from this input a complete P&ID P&ID_SYS can be generated, whereby for example the instruction is formulated as a missing connection detection and whereby such missing connections could be missing pipes but also missing signal lines from the corresponding control logic & safety design definitions.

For example, for this purpose a prompt that includes (a) an instruction text that reflects the task to be solved (e.g., {user request} + "identify all the missing connections in the following DEXPI XML") is, preferably automatically, constructed and (b) the retrieved subsystems are automatically serialized as DEXPI XML. Advantageously the output to be generated by the instruct LLM LLM3 then contains the XML elements, each representing a missing piping or signal line segment to be included into the piping and control & safety structure network of the complete P&ID P&ID_SYS.

For the discussed embodiment of the method according to the invention a respective embodiment of the system according to the invention becomes apparent, that can in principle be divided into the following components:
A. Pre-trained LLM LLM1, LLM2: state-of-the-art off-the-shelf model, e.g. GPT-4
B. Instruct LLM LLM3: a custom LLM designed for solving specific P&ID-related tasks, obtained through supervised fine-tuning.
C. Database DB of subsystems: a collection of common self-contained subsystems in DEXPI XML format + description of the equipment within the subsystem and the functionalities that the subsystem offers, i.e. a verbalization, A_P&IDn_SUB.
D. Retrieval-Augmented Generation

In the following some further details in connection with supervised fine-tuning to obtain said instruct LLM LLM3 shall be disclosed.

In general, supervised fine-tuning usually refers to a technique used in the training of LLMs, where the models are refined to respond better to specific user instructions.

This is also applied to a further embodiment of the system and the method according to the invention, the model being initially trained on a diverse range of internet text, and then fine-tuned on a narrower dataset with explicit instructions, which helps the model to understand and generate more accurate and relevant responses for specific tasks in a specific domain.

As the last step according to the embodiments of the invention combining the retrieved subsystems into a complete P&ID P&ID_SUB, and as according to the state of the art none of the pre-trained models can perform this task due to not being sufficiently exposed to DEXPI XML data, the system and method embodiment according to the invention solves said last step using an instruct LLM LLM3, in that said custom model is created by performing supervised fine-tuning on a dataset of (input, output) pairs that were specifically designed for this task. For example, each entry in the dataset contains as "input" a partially completed P&ID in DEXPI XML format, from which several piping or signal line network segments have been removed at random; the "output" portion of the dataset entry are the removed piping or signal line network segments. The generation of such a dataset according to this embodiment is relatively straightforward given a collection of complete P&IDs, which is usually given in industrial domains, so that this embodiment allows for easy implementation.

As for other advantages of the invention, one could distinguish between the benefits of using large language models as the technological basis of the system and method according to the invention and benefits that arise from leveraging the database of typical subsystems.

The system and method according to the invention makes use of large language models to first identify the required subsystems from the database DB, and then combine them to form the desired P&ID P&ID_SYS. Assuming the sufficiently high quality of data, the effort required to go from the "recipe" to a complete P&ID P&ID_SYS is dramatically reduced - both the retrieval of the required "building blocks", as well as identification of required piping and signal line connections are automated.

Based on this effort reduction the system and method according to the invention can strongly support the iterative engineering process by allowing the re-creation of P&IDs with more detailed or modified requirements. This allows a deeper optimization of the engineered process. Potentially, different variants of process layouts can be created and tested, e.g. via simulation.

By basing the final output of the system and method according to the invention on subsystems P&IDn_SYS retrieved from the database DB of "typicals", P&IDs of subsystems and related annotations A_SUB, our solution can lead to an improvement in efficiency and a reduction in errors. This approach also ensures consistency in design and in documentation and simplifies future maintenance and modifications.

As becomes apparent the integration of the system and method according to the invention into software solutions designed to optimize the management of plant engineering projects, e.g. Siemens COMOS, can drastically reduce the time needed for completing the configuration, making the process easier, less frustrating, and thus boosting the sales of both the software solution itself, and the associated hardware components.

Additionally, thanks to its data-driven nature, the method and system according to the invention supports the knowledge transfer from the more experienced engineers to the less experienced ones.

The solution according to the invention allows the generation of P&IDs from process descriptions provided in natural language. A refinement of the requirements via a user prompt and corresponding re-generation of the P&IDs is optionally possible. For this purpose, the solution uses a library of P&ID subsystems with verbal annotations, i.e. descriptions of their purposes, and distinguishes from known solutions as already described above, that are based on rule-based approaches in that these known approaches cannot provide comparable benefits at least not to the full extent as the rule-based systems require a full set of requirement definitions before the generation is carried out. Furthermore, an iterative detailing of requirements over time is in contrast to the invention not possible at all.

*Independent of the grammatical term usage, individuals with male, female or other gender identities are included within the term.*

## Claims

1. Computer-implemented method for building a Piping and Instrumentation Diagram, "P&ID", (P&ID_SYS),
**characterized in that**
a) first data (P&IDn_SYS) representing data structured according to a standardized description format (XML) at least describing a part of subsystems (P&IDn_SUB) of said P&ID (P&ID_SYS) representing a process, in particular industrial process, to be established, is automatically built based on a formalized textual input (RQS), said formalized textual input (RQS) being automatically generated based on a natural language input (NLI) representing said process, in particular industrial process, to be established, whereby
b) said natural language input (NLI) being automatically transformed to a second data representing formalized textual input (RQS),
c) said first data (P&IDn_SYS) is retrieved and/or combined based on said second data (RQS) in such a manner that third data (P&ID_SYS) representing said P&ID can be generated for further processing, for example at least temporally stored, displayed and/or edited,
d) said building of first data, transformation to second data, retrieval, combination and/or generation of third data (P&ID_SYS) is achieved through prompting at least one large language model (LLM1 ... LLM3).

2. The method according to claim 1,
**characterized in that** the natural language input (NLI) is detected and processed as a prompt to a first LLM (LLM1) in such a manner as to generate said formalized textual input (RQS) representing said process, in particular industrial process, to be established, whereby said second data is being built from formalized textual input (RQS) by incorporating at least a representation of the formalized textual input (RQS).

3. The method according to the previous claim,
**characterized in that** a pre-trained LLM, in particular an off-the-shelf model like e.g. GPT-4, is utilized as said first LLM (LLM1).

4. The method according to one of the previous claims,
**characterized in that** the first data (P&ID_SUB) is retrieved from a database (DB), whereby the database (DB) data is built of a plurality of subsystems (P&IDn_SUB) and textual annotations (A_SUB) in such a manner that for each subsystem data (P&IDn_SUB) a unique annotation (A_SUB), for example the subsystem's purpose, the solution approach, the description of the equipment within the subsystem, and/or the functionalities that the subsystem offers, is assigned and whereby each element representing a subsystem of said first data (P&IDn_SUB) is retrieved based on a matching process comparing said second data with said assigned annotations (A_SUB) identifying a subsystem (P&ID_SUB), if a criterion, for example a minimum amount of correlation, i.e. similarity, is met.

5. The method according to the previous claim,
**characterized in that** the matching process utilizes the second data (RQS) as query that is, to be matched, in particular by a keyword search engine, against the assigned annotations (A_SUB).

6. The method according to one of the previous two claims,
**characterized in that** the database (DB) is utilized as vector database.

7. The method according to the previous three claims,
**characterized in that** the assigned unique textual annotations (A_SUB) are generated by prompting a second LLM (LLM1, LLM2) with said first data (P&ID_SUB), said second LLM (LLM1, LLM2) being a fine-tuned LLM (LLM1, LLM2) based on few-shot prompting a pre-trained LLM, for example the first LLM (LLM1), with known pairs (A_P&IDn_SUB) of a subsystem (P&ID_SUB) (I&PD_SUB) and a unique annotation (A_SUB) of it.

8. The method according of one of the previous claims,
**characterized in that** at least said first data (P&IDn_SYS) and the respective second data (RQS) and/or natural language input (NLI) is processed as a prompt to a third LLM (LLM3) in such a manner as to generate said third data (P&ID_SYS) representing all subsystems of said process, in particular industrial process, to be established, whereby said third data (P&ID_SYS) is built in such a manner that the parts of the third data (P&ID_SYS) that go beyond the first data (P&IDn_SYS) are distinguishable.

9. The method according to the previous claim,
**characterized in that** a custom LLM created by performing supervised fine-tuning is utilized as the third LLM (LLM3).

10. The method according to the previous claim,
**characterized in that** the supervised fine-tuning is performed based on a number of datasets comprising a pair of input data and output data, said input data and said output data being of known complete P&IDs (P&ID_SYS) in such a manner that said input data presents a part of the complete P&ID (P&ID_SYS) and said output data represents the complementary missing part of the complete P&ID (P&ID_SYS), whereby the third LLM (LLM3) is prompted with said input data and the output data is used to refine the prediction said third LLM (LLM2) generates based on the input data, whereby the data is structured according to said standardized description format.

11. The Method according to the previous claim,
**characterized in that** said data structured according to a standardized description format is an XML format, in particular the "Data Exchange in the Process Industry"-, DEXPI-format.

12. Arrangement for building a Piping and Instrumentation Diagram, "P&ID", (P&ID_SYS), **characterized in that** it comprises means for carrying out the computer implemented method according to one of claims 1 to 11.

13. A computer program product,
**characterized in that** it comprises instructions which, when the program is executed by a computer, cause the computer to carry out the method according to one of claims 1 to 11.

14. A provisioning device for a computer program product,
**characterized in that** the provisioning device stores and/or provides the computer program product according to claim 13.

## Patentansprüche

1. Computerimplementiertes Verfahren zum Erstellen eines Rohrleitungs- und Instrumentierungsfließschemas, "R&I-Fließschema", (P&ID_SYS),
**dadurch gekennzeichnet, dass**
a) erste Daten (P&IDn_SYS), die Daten gemäß einem standardisierten Beschreibungsformat (XML) darstellen und mindestens einen Teil der Teilsysteme (P&IDn_SUB) des P&ID (P&ID_SYS) beschreiben, das einen einzurichtenden Prozess, insbesondere einen industriellen Prozess, darstellt, automatisch basierend auf einer formalisierten Texteingabe (RQS) erstellt werden, wobei die formalisierte Texteingabe (RQS) automatisch basierend auf einer natürlichsprachlichen Eingabe (NLI) generiert wird, die den einzurichtenden Prozess, insbesondere den industriellen Prozess, darstellt, wobei
b) die natürlichsprachliche Eingabe (NLI) automatisch in zweite Daten umgewandelt wird, die eine formalisierte Texteingabe (RQS) darstellen,
c) die ersten Daten (P&IDn_SYS) basierend auf den zweiten Daten (RQS) derart abgerufen und/oder kombiniert werden, dass dritte Daten (P&ID_SYS), die das P&ID darstellen, zur Weiterverarbeitung generiert werden können, beispielsweise mindestens zur vorübergehenden Speicherung, Anzeige und/oder Bearbeitung,
d) das Erstellen der ersten Daten, die Umwandlung in die zweiten Daten, der Abruf, die Kombination und/oder die Generierung der dritten Daten (P&ID_SYS) durch Prompten mindestens eines großen Sprachmodells (LLM1...LLM3) erreicht wird.

2. Verfahren nach Anspruch 1,
**dadurch gekennzeichnet, dass** die natürlichsprachliche Eingabe (NLI) als Prompt derart in ein erstes LLM (LLM1) erkannt und verarbeitet wird, dass die formalisierte Texteingabe (RQS) generiert wird, die den einzurichtenden Prozess, insbesondere den industriellen Prozess, darstellt, wobei die zweiten Daten aus der formalisierten Texteingabe (RQS) unter Einbeziehung mindestens einer Darstellung der formalisierten Texteingabe (RQS) erstellt werden.

3. Verfahren nach dem vorhergehenden Anspruch,
**dadurch gekennzeichnet, dass** ein vortrainiertes LLM, insbesondere ein handelsübliches Modell wie z. B. GPT-4, als das erste LLM (LLM1) genutzt wird.

4. Verfahren nach einem der vorhergehenden Ansprüche,
**dadurch gekennzeichnet, dass** die ersten Daten (P&ID_SUB) aus einer Datenbank (DB) abgerufen werden, wobei die Daten der Datenbank (DB) aus einer Vielzahl von Teilsystemen (P&IDn_SUB) und textuellen Annotationen (A_SUB) erstellt sind, und zwar derart, dass jedem Teilsystemdatensatz (P&IDn_SUB) eine eindeutige Annotation (A_SUB), beispielsweise der Zweck des Teilsystems, der Lösungsansatz, die Beschreibung der Ausrüstung innerhalb des Teilsystems und/oder die Funktionalitäten, die das Teilsystem bietet, zugewiesen wird und wobei jedes Element, das ein Teilsystem der ersten Daten (P&IDn_SUB) darstellt, basierend auf einem Abgleichprozess abgerufen wird, der die zweiten Daten mit den zugewiesenen Annotationen (A_SUB) vergleicht, die ein Teilsystem (P&ID_SUB) identifizieren, wenn ein Kriterium, beispielsweise ein Mindestmaß an Korrelation, d. h. Ähnlichkeit, erfüllt ist.

5. Verfahren nach dem vorhergehenden Anspruch,
**dadurch gekennzeichnet, dass** der Abgleichprozess die zweiten Daten (RQS) als Suchanfrage nutzt, die insbesondere durch eine Keyword-Suchmaschine mit den zugewiesenen Annotationen (A_SUB) abgeglichen werden soll.

6. Verfahren nach einem der vorhergehenden beiden Ansprüche,
**dadurch gekennzeichnet, dass** die Datenbank (DB) als Vektordatenbank genutzt wird.

7. Verfahren nach den vorhergehenden drei Ansprüchen,
**dadurch gekennzeichnet, dass** die zugewiesenen eindeutigen textuellen Annotationen (A_SUB) durch Prompten der ersten Daten (P&ID_SUB) in ein zweites LLM (LLM1, LLM2) generiert werden, wobei es sich bei dem zweiten LLM (LLM1, LLM2) um ein feinabgestimmtes LLM (LLM1, LLM2) handelt, das auf dem Prompten von wenigen Beispielen in ein vortrainiertes LLM, beispielsweise das erste LLM (LLM1), mit bekannten Paaren (A_P&IDn_SUB) eines Teilsystems (P&ID_SUB) (I&PD_SUB) und einer eindeutigen Annotation (A_SUB) desselben, basiert.

8. Verfahren nach einem der vorhergehenden Ansprüche,
**dadurch gekennzeichnet, dass** mindestens die ersten Daten (P&IDn_SYS) und die jeweiligen zweiten Daten (RQS) und/oder die natürlichsprachliche Eingabe (NLI) als Prompt in ein drittes LLM (LLM3) derart verarbeitet werden, dass die dritten Daten (P&ID_SYS) generiert werden, die alle Teilsysteme des einzurichtenden Prozesses, insbesondere des industriellen Prozesses, darstellen, wobei die dritten Daten (P&ID_SYS) derart erstellt sind, dass die Teile der dritten Daten (P&ID_SYS), die über die ersten Daten (P&IDn_SYS) hinausgehen, unterscheidbar sind.

9. Verfahren nach dem vorhergehenden Anspruch,
**dadurch gekennzeichnet, dass** ein durch überwachte Feinabstimmung erstelltes benutzerdefiniertes LLM als drittes LLM (LLM3) verwendet wird.

10. Verfahren nach dem vorhergehenden Anspruch,
**dadurch gekennzeichnet, dass** die überwachte Feinabstimmung basierend auf einer Reihe von Datensätzen durchgeführt wird, die jeweils ein Paar von Eingangsdaten und Ausgangsdaten umfassen, wobei es sich bei den Eingangsdaten und Ausgangsdaten um bekannte vollständige R&I-Fließschemata (P&ID_SYS) handelt, und zwar derart, dass die Eingangsdaten einen Teil des vollständigen R&I-Fließschemas (P&ID_SYS) darstellen und die Ausgangsdaten den komplementären fehlenden Teil des vollständigen R&I-Fließschemas (P&ID_SYS) darstellen, wobei das dritte LLM (LLM3) mit den Eingangsdaten gepromptet wird und die Ausgangsdaten verwendet werden, um die Vorhersage zu verfeinern, die das dritte LLM (LLM2) basierend auf den Eingangsdaten generiert, wobei die Daten gemäß dem standardisierten Beschreibungsformat strukturiert sind.

11. Verfahren nach dem vorhergehenden Anspruch,
**dadurch gekennzeichnet, dass** die gemäß einem standardisierten Beschreibungsformat strukturierten Daten ein XML-Format sind, insbesondere das "Data Exchange in the Process Industry"-Format (DEXPI).

12. Anordnung zum Erstellen eines Rohrleitungs- und Instrumentierungsfließschemas, "R&I-Fließschema", (P&ID_SYS), **dadurch gekennzeichnet, dass** es Mittel zum Durchführen des computerimplementierten Verfahrens nach einem der Ansprüche 1 bis 11 umfasst.

13. Computerprogrammprodukt,
**dadurch gekennzeichnet, dass** es Anweisungen umfasst, die, wenn das Programm durch einen Computer ausgeführt wird, den Computer veranlassen, das Verfahren nach einem der Ansprüche 1 bis 11 durchzuführen.

14. Bereitstellungsvorrichtung für ein Computerprogrammprodukt,
**dadurch gekennzeichnet, dass** die Bereitstellungsvorrichtung das Computerprogrammprodukt nach Anspruch 13 speichert und/oder bereitstellt.

## Revendications

1. Procédé mis en œuvre par ordinateur pour construire un schéma de tuyauterie et d'instrumentation, « P&ID », (P&ID_SYS), **caractérisé en ce que**
a) des premières données (P&IDn_SYS), représentant des données structurées selon un format de description normalisé (XML) décrivant au moins une partie de sous-systèmes (P&IDn_SUB) dudit P&ID (P&ID_SYS) représentant un processus, en particulier un processus industriel, à établir, sont construites automatiquement sur la base d'une entrée textuelle formalisée (RQS), ladite entrée textuelle formalisée (RQS) étant générée automatiquement sur la base d'une entrée en langage naturel (NLI) représentant ledit processus, en particulier le processus industriel, à établir, moyennant quoi
b) ladite entrée en langage naturel (NLI) étant transformée automatiquement en deuxièmes données représentant l'entrée textuelle formalisée (RQS),
c) lesdites premières données (P&IDn_SYS) sont récupérées et/ou combinées sur la base desdites deuxièmes données (RQS) de sorte que des troisièmes données (P&ID_SYS) représentant ledit P&ID puissent être générées pour un traitement ultérieur, par exemple pour être au moins temporairement stockées, affichées et/ou éditées,
d) ladite construction des premières données, transformation en deuxièmes données, récupération, combinaison et/ou génération des troisièmes données (P&ID_SYS) sont réalisées en sollicitant, au moyen d'une invite, au moins un grand modèle de langage (LLM1... LLM3).

2. Procédé selon la revendication 1,
**caractérisé en ce que** l'entrée en langage naturel (NLI) est détectée et traitée comme une invite adressée à un premier LLM (LLM1) de manière à générer ladite entrée textuelle formalisée (RQS) représentant ledit processus, en particulier un processus industriel, à établir, moyennant quoi lesdites deuxièmes données sont construites à partir de l'entrée textuelle formalisée (RQS) en incorporant au moins une représentation de l'entrée textuelle formalisée (RQS).

3. Procédé selon la revendication précédente,
**caractérisé en ce qu'**un LLM pré-entraîné, en particulier un modèle prêt à l'emploi tel que par exemple GPT-4, est utilisé comme étant ledit premier LLM (LLM1).

4. Procédé selon l'une des revendications précédentes,
**caractérisé en ce que** les premières données (P&ID_SUB) sont récupérées à partir d'une base de données (DB), moyennant quoi les données de la base de données (DB) sont constituées d'une pluralité de sous-systèmes (P&IDn_SUB) et d'annotations textuelles (A_SUB) de sorte qu'à chaque donnée de sous-système (P&IDn_SUB) soit attribuée une annotation unique (A_SUB), par exemple la fonction du sous-système, l'approche de solution, la description de l'équipement au sein du sous-système et/ou les fonctionnalités offertes par le sous-système, et moyennant quoi chaque élément représentant un sous-système desdites premières données (P&IDn_SUB) est récupéré sur la base d'un processus de mise en correspondance comparant lesdites deuxièmes données auxdites annotations attribuées (A_SUB) pour identifier un sous-système (P&ID_SUB) si un critère, par exemple un degré minimal de corrélation, c'est-à-dire de similarité, est satisfait.

5. Procédé selon la revendication précédente,
**caractérisé en ce que** le processus de mise en correspondance utilise les deuxièmes données (RQS) comme requête qui est destinée à être mise en correspondance, en particulier par un moteur de recherche par mots-clés, avec des annotations attribuées (A_SUB).

6. Procédé selon l'une des deux revendications précédentes, **caractérisé en ce que** la base de données (DB) est utilisée comme base de données vectorielle.

7. Procédé selon les trois revendications précédentes,
**caractérisé en ce que** les annotations textuelles uniques attribuées (A_SUB) sont générées en sollicitant, au moyen d'une invite, un deuxième LLM (LLM1, LLM2) avec lesdites premières données (P&ID_SUB), ledit deuxième LLM (LLM1, LLM2) étant un LLM (LLM1, LLM2) affiné sur la base d'une invite fondée sur quelques exemples d'un LLM pré-entraîné, par exemple le premier LLM (LLM1), avec des paires connues (A_P&IDn_SUB) d'un sous-système (P&ID_SUB)(I&PD_SUB) et d'une annotation unique (A_SUB) de celui-ci.

8. Procédé selon l'une des revendications précédentes,
**caractérisé en ce qu'**au moins lesdites premières données (P&IDn_SYS) et les deuxièmes données respectives (RQS) et/ou une entrée en langage naturel (NLI) sont traitées comme une invite adressée à un troisième LLM (LLM3) de manière à générer lesdites troisièmes données (P&ID_SYS) représentant tous les sous-systèmes dudit processus, en particulier le processus industriel, à établir, moyennant quoi lesdites troisièmes données (P&ID_SYS) sont construites de sorte que les parties des troisièmes données (P&ID_SYS) qui vont au-delà des premières données (P&IDn_SYS) soient distinguables.

9. Procédé selon la revendication précédente,
**caractérisé en ce qu'**un LLM personnalisé, créé par la réalisation d'un affinement supervisé, est utilisé en tant que troisième LLM (LLM3).

10. Procédé selon la revendication précédente,
**caractérisé en ce que** l'affinement supervisé est effectué sur la base d'un certain nombre d'ensembles de données comprenant une paire de données d'entrée et de données de sortie, lesdites données d'entrée et lesdites données de sortie provenant de P&ID complets connus (P&ID_SYS), de sorte que lesdites données d'entrée présentent une partie du P&ID complet (P&ID_SYS) et que lesdites données de sortie représentent la partie manquante complémentaire du P&ID complet (P&ID_SYS), moyennant quoi le troisième LLM (LLM3) est sollicité, au moyen d'une invite, avec lesdites données d'entrée et les données de sortie sont utilisées pour affiner la prédiction que ledit troisième LLM (LLM2) génère sur la base des données d'entrée, moyennant quoi les données sont structurées selon ledit format de description normalisé.

11. Procédé selon la revendication précédente,
**caractérisé en ce que** lesdites données structurées selon un format de description normalisé sont dans un format XML, en particulier le format DEXPI « Data Exchange in the Process Industry ».

12. Agencement pour construire un schéma de tuyauterie et d'instrumentation, « P&ID », (P&ID_SYS), **caractérisé en ce qu'**il comprend des moyens pour réaliser le procédé mis en œuvre par ordinateur selon l'une des revendications 1 à 11.

13. Produit de programme informatique,
**caractérisé en ce qu'**il comprend des instructions qui, lorsque le programme est exécuté par un ordinateur, amènent l'ordinateur à réaliser le procédé selon l'une des revendications 1 à 11.

14. Dispositif de fourniture pour un produit de programme informatique,
**caractérisé en ce que** le dispositif de fourniture stocke et/ou fournit le produit de programme informatique selon la revendication 13.
